# EUROPEAN PATENT APPLICATION

(11) **EP 4 213 077 A1**
(43) Date of publication of application: **19.07.2023**
(21) Application number: 22212487.7
(22) Date of filing: 09.12.2022
(51) Int. Cl.: G06N 5/01, G06N 20/20

(54) **METHODS, APPARATUS, AND COMPUTER READABLE STORAGE MEDIUM TO IMPLEMENT A RANDOM FOREST**

(30) Priority: 13.01.2022 US 202217575415
(71) Applicant: General Electric Company, Schenectady, NY 12345 (US)
(72) Inventor: DOWDELL, Charles, Lynn, MA, 01905 (US); MERCER, David Anthony, Cincinnati, OH, 45202 (US)
(74) Representative: Openshaw & Co.

(57) **Abstract**

Methods, apparatus, systems, and articles of manufacture to implement a random forest are disclosed. An example apparatus (104, 112) includes logic circuitry (202) to, for a first cycle, identify a feature value corresponding to an initial node identifier of a data structure, the feature value including in an input feature array. The apparatus further (104, 112) includes a comparator (206) to compare the feature value to a threshold corresponding to the initial node identifier. The apparatus (104, 112) further includes a register (208) to store (a) a first updated node identifier when the feature value is above the threshold or (b) a second updated node identifier when the feature value is below the threshold, the logic circuitry (202) to use the updated node identifier for a second cycle.

## Description

### FEDERALLY SPONSORED RESEARCH

This invention was made with Government support under W58RGZ-16-C-0047 awarded by the U.S. Army. The Government has certain rights in this invention.

### FIELD OF THE DISCLOSURE

This disclosure relates generally to machine learning, and, more particularly, to method, apparatus, and computer readable storage medium to implement a random forest.

### BACKGROUND

In recent years, artificial intelligence (e.g., machine learning, deep learning, etc.) have increased in popularity. Artificial intelligence can be implemented using a random forest, but it can be difficult to implement. For example, random forest classifiers include a plurality of decision trees that include if-else statements or static evaluators. Such random forest classifiers may require significant resources (e.g., processing resources, memory, throughput, etc.) to properly implement.

### BRIEF DESCRIPTION OF THE DRAWINGS

FIG. 1 is a schematic illustration of an example random forest described in conjunction with examples disclosed herein.
FIG. 2 is a block diagram of example tree-based decision circuitry of FIG. 2.
FIG. 3 is an example of a parametric classifier structure that can be used by the example tree-based decision circuitry of FIG. 2.
FIG. 4A illustrates a flowchart representative of example machine readable instructions which can be executed to implement the example random forest of FIGS. 1-2.
FIGS. 4B illustrates a flowchart representative of example machine readable instructions which can be executed to implement the example random forest of FIGS. 1-2.
FIG. 5 is a block diagram of an example processing platform structured to execute the instructions of FIGS. 4A and 4B to implement the random forest of FIGS. 1 and/or 2.
FIG. 6 is a block diagram of an example software distribution platform to distribute software (e.g., software corresponding to the example computer readable instructions of FIG. 5) to client devices such as consumers (e.g., for license, sale and/or use), retailers (e.g., for sale, re-sale, license, and/or sub-license), and/or original equipment manufacturers (OEMs) (e.g., for inclusion in products to be distributed to, for example, retailers and/or to direct buy customers).

The figures are not to scale. In general, the same reference numbers will be used throughout the drawing(s) and accompanying written description to refer to the same or like parts. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. Although the figures show layers and regions with clean lines and boundaries, some or all of these lines and/or boundaries can be idealized. In reality, the boundaries and/or lines can be unobservable, blended, and/or irregular.

Descriptors "first," "second," "third," etc. are used herein when identifying multiple elements or components which can be referred to separately. Unless otherwise specified or understood based on their context of use, such descriptors are not intended to impute any meaning of priority, physical order or arrangement in a list, or ordering in time but are merely used as labels for referring to multiple elements or components separately for ease of understanding the disclosed examples. In some examples, the descriptor "first" can be used to refer to an element in the detailed description, while the same element can be referred to in a claim with a different descriptor such as "second" or "third." In such instances, it should be understood that such descriptors are used merely for ease of referencing multiple elements or components.

### DETAILED DESCRIPTION

Machine learning models, such as random forests, are used to perform a task (e.g., classify data). Machine learning can include a training stage to train the model using ground truth data (e.g., data correctly labelled with a particular classification). Training a traditional random forest adjusts regression trees (e.g., decision trees) in one or more tree-based structure to output a desired classification based on feature(s) of the input data. After training, data is input into the trained random forest to be able to process the input data to perform a function (e.g., classify data). Thus, a random forest classifier uses a plurality of decision trees to infer an unknown class (e.g., output) from known conditions (e.g., input data or features).

A random forest can perform classification, regression, and/or other tests based on a decision tree trained to generate a particular result based on training data (e.g., pre-classified truth data). Once the random forest is trained, unclassified input data can be input into the random forest to generate an output classification based on any input. Random forests are used for the emerging fields of artificial intelligence and/or machine learning. In some examples, random forests include multiple decision trees. In such examples, each tree generates a classification based on the input data and the random forest outputs the classification that occurs the most (e.g., the mode or modal output) from the multiple trees.

Because traditional random forest classifiers include a plurality of decision trees that include if-else statements or static evaluators, a traditional random forest classifier requires sufficient resources (e.g., processing resources, memory, throughput, etc.) to properly implement. However, in limited resource systems, the amount of resources to implement a traditional random forest can be insufficient and/or impractical to implement. For example, embedded software (e.g., implemented in engine system, health monitoring system, in edge devices, in cloud based systems, etc.) can have limited throughput, processing resources, memory, etc. Examples disclosed herein implement a random forest classifier using a data structure to reduce the resources needed to implement the random forest classifier. In this manner, examples disclosed herein can implement a random forest classifier in resource limited systems and/or other systems (e.g., to conserve resources for other tasks).

Examples disclosed herein utilize a data structure to implement a random forest classifier with less resources than a traditional random forest classifier. The data structure includes a table of information that corresponds to a decision tree to exercise every path in a tree through a pseudo regression model. Examples disclosed herein leverage the data structure with complementary logic to translate a radon forest into a flat format (e.g., all decisions correspond to a single self-contained structure and do not require external references to implement), thereby allowing for a complex forest algorithm to be implemented in a resource limited system.

In general, implementing a machine learning (ML)/artificial intelligence (AI) system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters can be used as part of the training process to control how the learning is performed (e.g., a learning rate, a number of layers to be used in the machine learning model, etc.). Hyperparameters are defined to be training parameters that are determined prior to initiating the training process.

Different types of training can be performed based on the type of ML/AI model and/or the expected output. As used herein, labelling refers to an expected output of the machine learning model (e.g., a classification, an expected output value, etc.). Alternatively, unsupervised training (e.g., used in deep learning, a subset of machine learning, etc.) involves inferring patterns from inputs to select parameters for the ML/AI model (e.g., without the benefit of expected (e.g., labeled) outputs).

In examples disclosed herein, training is performed until a threshold number of actions have been predicted. In examples disclosed herein, training is performed either locally (e.g., in the device) or remotely (e.g., in the cloud and/or at a server). Training can be performed using hyperparameters that control how the learning is performed (e.g., a learning rate, a number of layers to be used in the machine learning model, etc.). In some examples re-training can be performed. Such re-training can be performed in response to a new program being implemented or a new user using the device. Training is performed using training data. When supervised training can be used, the training data is labeled. In some examples, the training data is pre-processed.

Once training is complete, the model is deployed for use as an executable construct that processes an input and provides an output based on the network of nodes and connections defined in the model. The model is stored locally in memory (e.g., cache and moved into memory after trained) or can be stored in the cloud. The model can then be executed by the computer cores.

Once trained, the deployed model can be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data can undergo post-processing after it is generated by the AI model to transform the output into a useful result (e.g., a display of data, an instruction to be executed by a machine, etc.).

In some examples, output of the deployed model can be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

Examples disclosed herein result in an accurate and efficient random forest classifier that uses less resources to classify than traditional approaches. Accordingly, random forest classifiers can be utilized in limited resource systems, whereas the amount of resources to implement a traditional random forest can be insufficient and/or impractical to implement in such limited resource systems. For example, embedded software (e.g., implemented in engine system, health monitoring system, in edge devices, in cloud based systems, etc.) with limited throughput, processing resources, memory, etc. can utilize accurate random forest classification using examples disclosed herein.

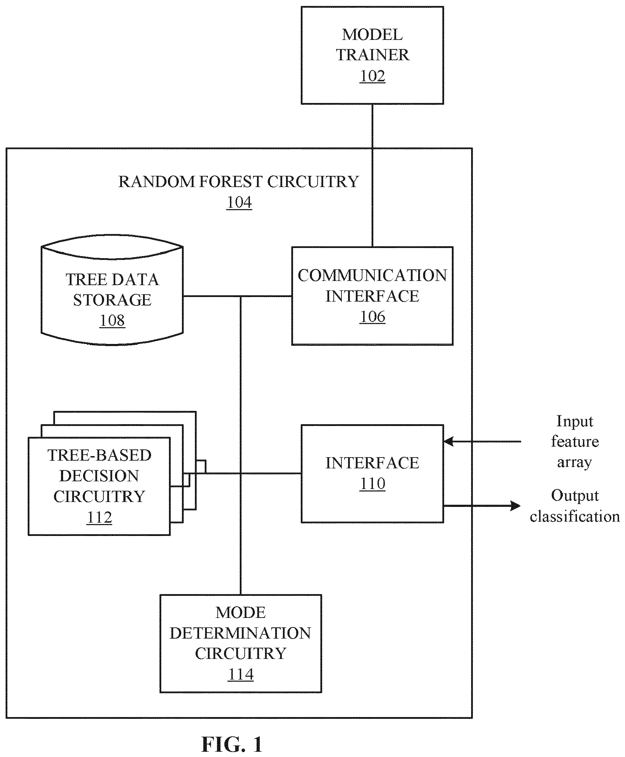

FIG. 1 is a schematic illustration of an example model trainer 102 to train example random forest circuitry 104. The example random forest circuitry 104 includes an example communication interface 106, example tree data storage 108, an example interface 110, example tree-based decision circuitry 112, and example mode determination circuitry 114.

The example model trainer 102 of FIG. 1 trains the random forest circuitry 104 by generating a random forest algorithm to output a desired classification based on input data with known classifications. Initially, the random forest circuitry 104 is untrained (e.g., the trees are not yet developed). To train the random forest circuitry 104, the example model trainer 102 of FIG. 1 uses training data (e.g., input data labelled with known classifications and/or outputs) to configure the random forest circuitry 104 to be able to predict output classifications for input data with unknown classification. The model trainer 102 can train a model with a first set of training data and test the model with a second set of the training data. If, based on the results of the testing, the accuracy of the model is below a threshold, the model trainer 102 can tune (e.g., adjust, further train, etc.) the parameters of the model using additional sets of the training data and continue testing until the accuracy exceeds the threshold.

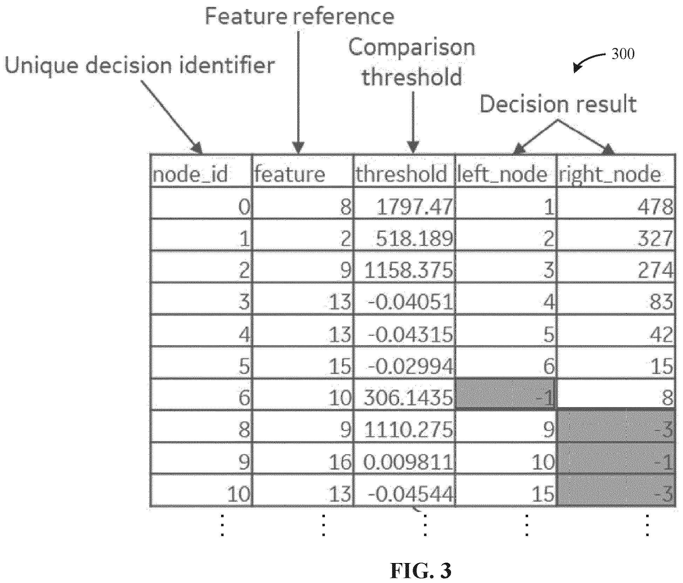

In some examples, the model trainer 102 of FIG. 1 trains a random forest classifier to include multiple different decision trees. In such examples, each tree is trained to generate a classification based on particular sections of the input data. In this manner each tree can make a decision based on the details of a particular portion of the input data to process the input data more granularly. After the random forest is generated, the example model trainer 102 converts the random forest into parametric classification data structure(s) (e.g., a data structure for each tree in the random forest). The parametric classification data structure(s) convert the random forest into a flat format so that the logic to implement the random forest can be simplified by performing simple comparisons based on data corresponding to the parametric classification data structure(s). The parametric classification data structure(s) includes node identifiers, feature identifiers corresponding to the node identifiers, comparison thresholds corresponding to the node identifiers, and node identifier pointers that result from the comparison. An example of a parametric classification data structure is further described below in conjunction with FIG. 3.

After the model trainer 102 of FIG. 1 has trained and converted the random forest(s) into data structure(s), the example model trainer 102 transmits the data structure(s) to the example random forest circuitry 104 via the communication interface 106. The example model trainer 102 can be implemented in the same device as the random forest circuitry 104 and/or in a separate device in communication with the example random forest circuitry 104. For example, the model trainer 102 can be located remotely, develop the tree data locally to the random forest circuitry 104 for implementation (e.g., generation of decision trees that correspond to the determine distribution data).

The example random forest circuitry 104 of FIG. 1 can be implemented in a computing device and/or system. For example, the random forest circuitry 104 can be implemented in an embedded system, such as an engine controller. The example random forest circuitry 104 can be implemented to be available to the controller, pilot, etc. for use to inform decision about what do with an engine the unique characteristics that may come up during a flight and/or while an engine is in use. Additionally, the random forest circuitry 104 can be implemented in a health care system, to aid in the processing and/or decision making based on timely and/or available diagnostic information.

The example random forest circuitry 104 of FIG. 1 includes the example communication interface 106 to obtain data structure(s) that correspond to a trained random forest via a wired or wireless communication. After the data structure(s) are obtained, the communication interface 106 stores the data structure(s) in the example tree data storage 108. The example tree data storage 108 stores the data structures in conjunction with an identifier. In this manner, the tree-based decision circuitry 112 can obtain a data structure corresponding to a specific tree to implement a classification. If an update and/or new (e.g., replacement and/or additional) data structures are received, the tree data storage 108 can update the storage according to the updated and/or new information.

The example interface 110 of FIG. 1 obtains input feature arrays. An input feature array is an array, vector, and/or matrix of data corresponding to input data that is to be classified. For example, an input feature array may include information related to an image, a video, text, signals (e.g., audio signals, video signals, etc.) and/or any other type of data that can be processed using a random forest. After obtaining an input feature array, the example interface 100 passes the array to the tree-based decision circuitry 112. Additionally, after the mode determination circuitry 114 has generated a final output (e.g., output classification), the example interface 100 can output the final output to another device, circuitry, processor, system, etc. In this manner, the other device, circuitry, processor, system, etc. can take steps based on the output. The interface 100 may be one interface to an input feature array and output a classification or may be two interfaces (e.g., one to obtain the input feature array and one to output the classification).

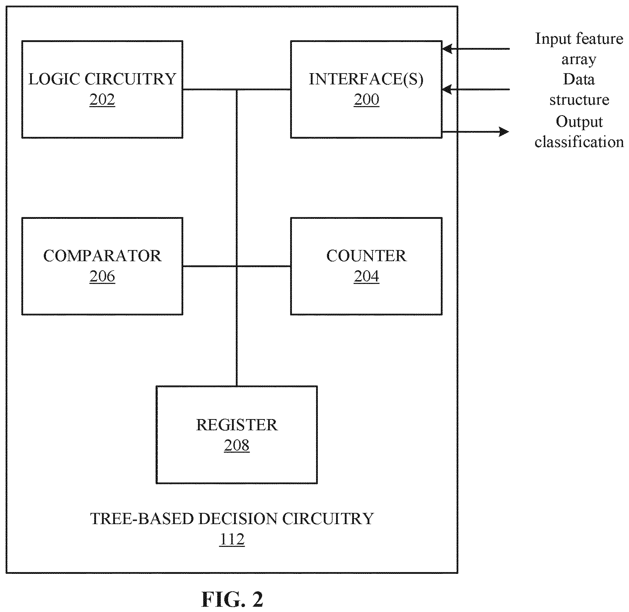

The example tree-based decision circuitry 112 of FIG. 1 includes a plurality of tree-based decision circuitry to execute tree-based logic using a corresponding data structure. For example, first tree-based decision circuitry performs a first classification using an input feature array and a first parametric classifier data structure, second tree-based decision circuitry performs a second classification using the input feature array and a second parametric classifier data structure, etc. There may be any number of tree-based decision circuitry corresponding to any number of parametric classification data structures. Because each parametric classifier data structure focusses on a different aspect of the input data, the tree-based decision circuitry 112 generates a plurality of classifications corresponding to different aspects of the input data. The example tree-based decision circuitry 112 is further described below in conjunction with FIG. 2. The example tree-based decision circuitry 112 outputs the classifications to the example mode determination circuitry 114.

The example mode determination circuitry 114 of FIG. 1 determines the most common classification from the multiple classifications output by the example tree-based decision circuitry 112 (e.g., the mode). For example, if there are 10 classifications corresponding to a first classification, 20 classifications corresponding to a second classification, and 500 classifications corresponding to a third classification, the mode determination circuitry 114 determines that the third classification is the mode and outputs the third classification to the interface 110 to be output to another device and/or component.

FIG. 2 is a block diagram of the example tree-based decision circuitry 112 of FIG. 1 for a single tree. The example tree-based decision circuitry 112 includes example interface(s) 200, example logic circuitry 202, an example counter 204, an example comparator 206, and an example register 208.

The example interface(s) 200 of FIG. 2 obtains the input feature array and the parametric classification data structure corresponding to a trained tree. Additionally, the example interface(s) 200 outputs the output classification after the classification is determined. In some examples, the interface(s) 200 is a single interface that obtains the input feature array and data structure and outputs an output classification. In some examples, the interface(s) 200 includes multiple interfaces (e.g., on to obtain the input feature array, one to obtain the data structure, one to output the output classification, etc.).

The example logic circuitry 202 of FIG. 2 utilizes obtained data structure and the input feature array to perform a function that results in a leaf node of the tree (e.g., corresponding to a classification). As further described below, the logic circuitry 202 uses the parametric classification data structure to make determinations based on results of a comparison and/or to determine when a leaf has been reached. The example logic circuitry 202 performs multiple iterations of comparisons using the input feature array to result in a leaf (e.g., an output classification). For example, for a first iteration, the example logic circuitry 202 starts at a first node of the parametric classification data structure and identifies a input feature corresponding to the first node. After the input feature is identified, the example logic circuitry 202 uses the comparator 206 to compare the input feature to a threshold corresponding to the first node. If the input feature exceeds a threshold, the logic circuitry 202 identifies a first output node value corresponding to the first node. If the input feature is below the threshold, the logic circuitry 202 identifies a second output node value corresponding to the first node. The logic circuitry 202 determines if the output node value corresponds to a leaf. If the logic circuitry 202 determines that the output node corresponds to a leaf, the logic circuitry 202 outputs the classification as a final output classification. If the logic circuitry 202 determines that the output node does not correspond to a leaf, the logic circuitry 202 stores the output node in the example register 208 (e.g., for another iteration). In this manner, the output node is used as an input for a second iteration through the parametric classification data structure. Additionally, the logic circuitry 202 may increment the example counter 204 for each iteration through entries in the parametric classification data structure. In this manner, the logic circuitry 202 can determine if an error occurred if the counter 204 reaches a threshold number of interactions without finding a leaf classification. If the example logic circuitry 202 determines that an error has occurred, the logic circuitry 202 can discard the classification.

An example of pseudo code that may be implemented by the example logic circuitry 202 is shown below in Table 1.

**Table 1 - Classification Pseudo Code**

| |
|---|
| ```
int function decision_operator(tree) {
 node_id = 0;
 for (cycle=1; cycle <= 10; cycle++)
 {
 if (tree[node_id] is a leaf)
 {
 output = tree[node_id].class;
 }
 else if (tree [node_id].feature <= tree[node_id].threshold)
``` |
| ```
 {
 node id = tree[node_id].left_node;
 }
 else
 {
 node id = tree[node_id].right_node;
 }
 }
 return output;
}
``` |

The example counter 204 of FIG. 2 tracks the number of cycles and/or iterations when traversing through the parametric classification data structure. For example, the counter 204 is initiated to zero and for each feature to threshold comparison, the counter 204 is incremented until a leaf is found. When a leaf is found or when a threshold number of cycle counts have occurred (e.g., corresponding to an error), the counter 204 resets to zero.

The example comparator 206 of FIG. 2 compares feature values to thresholds to determine an output node value. For example, for a particular cycle/iteration if the feature value exceeds the threshold, the comparator 206 will output a first value, and, if the feature value is below the threshold, the comparator 206 will output a second value. In this manner, the logic circuitry 202 can determine which output node value to output for a subsequent cycle based on the output of the comparator 206. Additionally, the comparator 206 can compare the count of the example counter 204 to a threshold to determine whether the classification results in an error.

The example register 208 of FIG. 2 stores a node identifier output by the logic circuitry as the result of a cycle. In this manner, the output node identifier stored in the example register 208 can be used as the input node identifier for a subsequent cycle/iteration. In some examples, the register 208 includes and/or is connected to a latch and/or delay circuitry to output the output node identifier at an appropriate time to start the next cycle/iteration. Because the register 208 stores the node identifier, the logic circuitry 202 can pause the classification process at any time to perform other tasks. When the logic circuitry 202 resumes the classification process, the register 208 will be storing the last output node identifier, so that the process can continue right where it left off. For example, if during the process of a classification, the node identifier of '7' is output and stored in the example register 208 and the computing system that implements the random forest circuitry 104 decides to pause classification to do another task(s) (e.g., via an interrupt or other instruction), the logic circuitry 202 pauses classification and the register 208 will hold the stored identifier of '7.' After the computing device completes the task(s), the logic circuitry 202 resumes the classification process by using the stored identifier of '7' to continue the classification. In this manner, pausing a classification will not result in restarting the entire classification process.

FIG. 3 illustrates an example parametric classification data structure 300 that may be used by the example tree-based decision circuitry 112 of FIG. 1. The values in the example parametric classification data structure 300 are based on a trained random forest classifier. However, the values can be different for a different trained random forest classifier. Although the example parametric classification data structure 300 includes 10 entries, there are additional rows corresponding to additional node identifiers.

As described above, the node identifier is initialized to zero. Accordingly, the example logic circuitry 202 identifies that, for the node_identifier of 0, the corresponding feature is the 8^{th} element of the feature array. After identifying the that the node identifier of 0 corresponds to the 8^{th} element of the feature array, the example logic circuitry 202 can obtain the 8^{th} element of the feature array and the comparator 206 can compare the obtained element to the threshold. If the 8^{th} element of the feature array is less than the threshold, the logic circuitry 202 outputs the left node element of '1' (e.g., an updated node identifier for subsequent second cycle). If the 8^{th} element of the feature array is more than the threshold, the logic circuitry 202 outputs the right node element of '478' (e.g., an updated node identifier for subsequent second cycle). The output node identifier is stored in the example register 208 and used as the input node identifier for a subsequent cycle. For example, if the 8^{th} element of the feature array is more than the threshold, the logic circuitry 202 outputs the left node of' 1' to register 208 and the next cycle does to the node identifier of ' 1' to compare the 2^{nd} element of the feature array to the threshold of 518.189. If the 8^{th} element of the feature array is less than the threshold, the logic circuitry 202 outputs the right node of '478' to register 208 and the next cycle uses the updated node identifier of '478' for a comparison of the feature at the row corresponding to the '478' node identifier to the threshold corresponding to the '478' node identifier.

To identify a leaf, the example parametric classification data structure 300 is structured to output a negative number to identify a leaf and/or classification, where each negative number corresponds to a different classification. For example, a '-1' corresponds to a first classification, a '-2' corresponds to a second classification, a '-3' corresponds to a third classification, etc. In this manner, the logic circuitry 202 can identify a leaf when the output node identifier is negative and determine the classification based on the number of the output node identifier. Although the example parametric classification data structure 300 is structured to output negative numbers for leaves and/or classifications, the example parametric classification data structure 300 can output any number to correspond to a leaf and/or classification. As described above in conjunction with FIG. 1, the classification can be used to identify unique engine conditions and/or health care diagnostic conditions to tailor maintenance or optimize performance.

While an example manner of implementing the random forest circuitry 104 of FIG. 1 is illustrated in FIGS. 1-2, one or more of the elements, processes and/or devices illustrated in FIGS. 1-2 may be combined, divided, re-arranged, omitted, eliminated and/or implemented in any other way. Further, the example communication interface 106, the example interface 110, the example tree-based decision circuitry 112, the example mode determination circuitry 114, the example interface(s) 200, the example logic circuitry 202, the example counter 204, and/or the example comparator 206, and/or, more generally, the example random forest circuitry 104 and/or the example tree-based decision circuitry 112 of FIGS. 1-2 may be implemented by hardware, software, firmware and/or any combination of hardware, software and/or firmware. Thus, for example, any of the example communication interface 106, the example interface 110, the example tree-based decision circuitry 112, the example mode determination circuitry 114, the example interface(s) 200, the example logic circuitry 202, the example counter 204, and/or the example comparator 206, and/or, more generally, the example random forest circuitry 104 and/or the example tree-based decision circuitry 112 of FIGS. 1-2 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example communication interface 106, the example interface 110, the example tree-based decision circuitry 112, the example mode determination circuitry 114, the example interface(s) 200, the example logic circuitry 202, the example counter 204, and/or the example comparator 206, and/or, more generally, the example random forest circuitry 104 and/or the example tree-based decision circuitry 112 of FIGS. 1-2 is/are hereby expressly defined to include a non-transitory computer readable storage device or storage disk such as a memory, a digital versatile disk (DVD), a compact disk (CD), a Blu-ray disk, etc. including the software and/or firmware. Further still, the example the example random forest circuitry 104 and/or the example tree-based decision circuitry 112 of FIGS 1 and/or 2 may include one or more elements, processes and/or devices in addition to, or instead of, those illustrated in FIG. 1 and/or 2, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

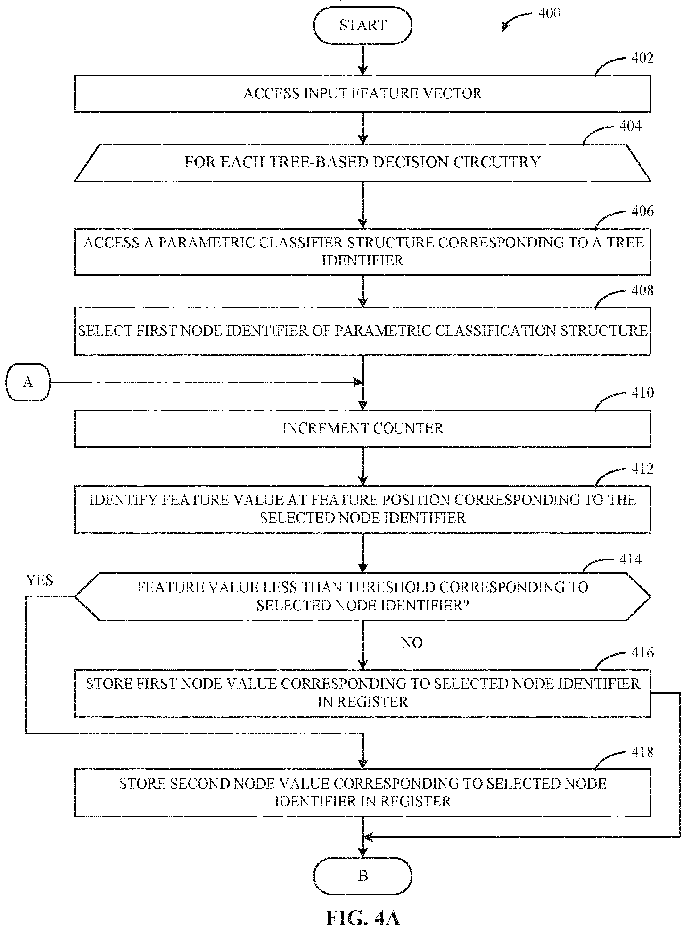

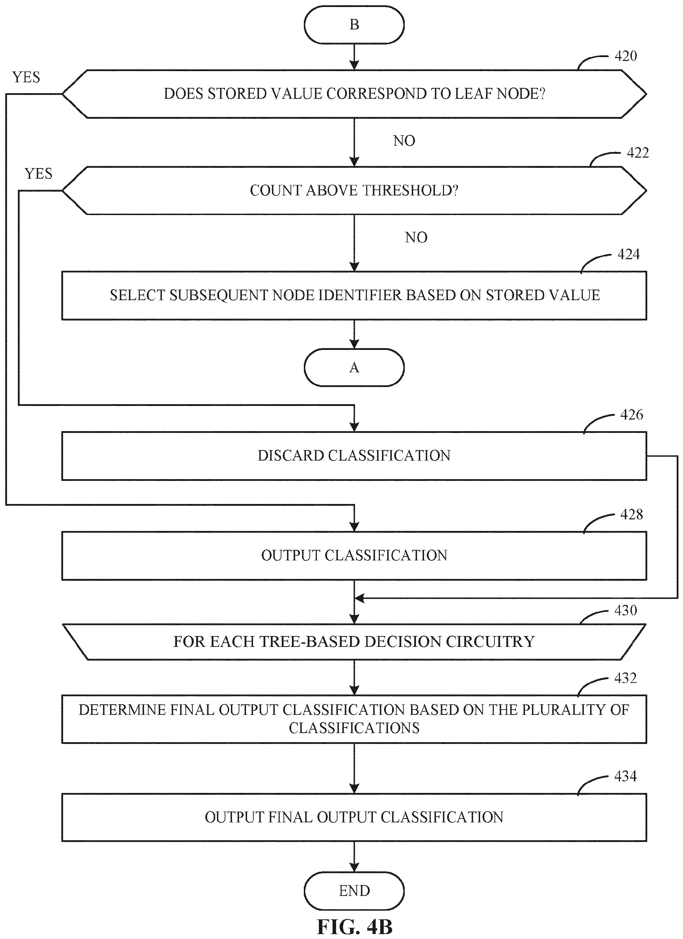

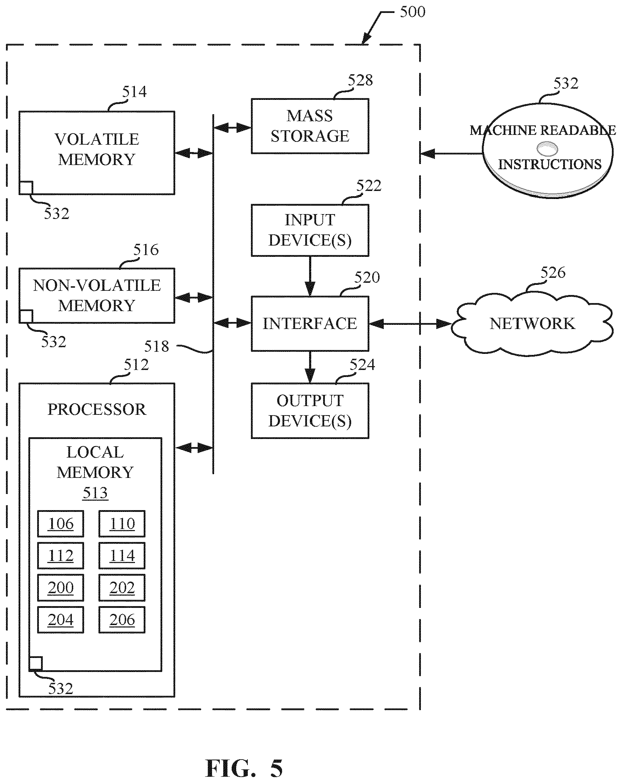

A flowchart representative of example hardware logic, machine readable and/or executable instructions, hardware implemented state machines, and/or any combination thereof for implementing the example random forest circuitry 104 and/or the example tree-based decision circuitry 112 of FIG. 1 and/or 2 is shown in FIGS. 4A and 4B. The machine readable instructions may be one or more executable programs or portion(s) of an executable program for execution by a computer processor and/or processor circuitry, such as the processor 512 shown in the example processor platform 500 discussed below in connection with FIG. 5. The program may be embodied in software stored on a non-transitory computer readable storage medium such as a CD-ROM, a floppy disk, a hard drive, a DVD, a Blu-ray disk, or a memory associated with the processor 512, but the entire program and/or parts thereof could alternatively be executed by a device other than the processor 512 and/or embodied in firmware or dedicated hardware. Further, although the example program is described with reference to the flowchart illustrated in FIGS. 4A and 4B, many other methods of implementing the example random forest circuitry 104 and/or the example tree-based decision circuitry 112 of FIG. 1 and 2 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 4A and 4B may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIGS. 4A and 4B illustrate a flowchart representative of example machine readable and/or executable instructions 400 which may be executed to by the example random forest circuitry 104 and/or the tree-based decision circuitry 112 of FIG. 2 to execute a random-forest based classification. Although the machine readable and/or executable instructions 400 are described in conjunction with the example random forest circuitry 104 of FIG. 1, the machine readable and/or executable instructions 400 may be described in conjunction with any type of random forest circuitry using any type of data (e.g., input data or activations).

At block 402, the example interface(s) 200 of the tree-based decision circuitry 112 access an input feature vector (e.g., via the interface 110). As described above, the input feature vector or array is input data that corresponds to an image, a video, audio, text, and/or any other data that can be processed by a random forest. For each tree-based decision circuitry 112 (blocks 404-430) (e.g., where each tree-based decision circuitry 112 corresponds to a different parametric classification data structure), the example interface 200 accesses a parametric classifier structure corresponding to a tree identifier (e.g., each tree-based decision circuitry 112 corresponding to a different tree identifier) (block 406).

At block 408, the example logic circuitry 202 selects a first node identifier (e.g., '0') corresponding to a first row of the parametric classification structure (e.g., the parametric classification data structure 300 of FIG. 3). At block 410, the example logic circuitry 202 causes the example counter 204 to increment (e.g., from 0 to 1). As described above, the counter 204 tracks when too many cycles have occurred, which can correspond to an error. At block 412, the example logic circuitry 202 identifies a feature value at a location of the feature array corresponding to the selected node identifier. For example, using the example parametric classification data structure 300 of FIG. 3, the logic circuitry 202 identifies that the location corresponding to the selected node identifier of 0 corresponds to the 8^{th} position of the feature array. Accordingly, the example logic circuitry 202 identifies the 8^{th} value of the feature array to be the feature value.

At block 414, the example comparator 206 determines if the feature value (e.g., the 8^{th} value of the feature array) is less than the threshold corresponding to the selected node identifier. For example, for the node_id '0' (e.g., for the first cycle) the comparator 206 compares the 8^{th} value of the feature array to the 1797.47 threshold. If the example comparator 206 determines that the feature value is not less than the threshold corresponding to the selected node identifier (block 414: NO), the example logic circuitry 202 stores a first node value (e.g., the left node) corresponding to the selected node identifier in the example register 208 (block 416) and control continues to block 420 of FIG. 4B. For example, if the 8^{th} value of the feature array is not less than 1797.47, the example logic circuitry 202 store ' 1' in the register 208. If the example comparator 206 determines that the feature value is less than the threshold corresponding to the selected node identifier (block 414: YES), the example logic circuitry 202 stores a second node value (e.g., the right node) corresponding to the selected node identifier in the example register 208 (block 418) and control continues to block 420 of FIG. 4B. For example, if the 8^{th} value of the feature array is less than 1797.47, the example logic circuitry 202 store '478' in the register 208.

At block 420 of FIG. 4B, the example logic circuitry 202 determines if the stored value in the register 208 an/or the output node value from the cycle corresponds to a leaf node. As described above, leave nodes may be nodes that correspond to specific values (e.g., negative numbers). Accordingly, if the output node identifier from a cycle (e.g., that is stored in the register 208) corresponds to a predetermined leaf value (e.g., a negative value), the logic circuitry 202 determines that the result corresponds to a leaf. If the example logic circuitry 202 determines that the stored value corresponds to a leaf node (block 420: YES), control continues to block 428, as further described below.

If the example logic circuitry 202 determines that the stored value does not correspond to a leaf node (block 420: NO), the example logic circuitry 202 checks the count of the counter 204 to see if the count exceeds a threshold (block 422). The parametric classification data structure may be structured so that only a threshold number of cycles should occur before a leaf is found unless an error occurs. Accordingly, the count is used to determine whether an error occurred. If the example logic circuitry 202 determines that the count does not exceed the threshold (block 422: NO), the example logic circuitry 202 selects a subsequent (e.g., updated) node identifier based on the stored value (block 424) and control returns to block 410 of FIG. 4A.

If the example logic circuitry 202 determines that the count exceeds the threshold (block 422: YES), the logic circuitry 202 discards the classification (block 426) because an error occurred and control continues to block 430. If the example logic circuitry 202 determines that the stored value corresponds to a leaf node (block 420: YES), the example logic circuitry 202 outputs the output classification to the example mode determination circuitry 114 via the example interface 200 (block 428). At block 432, the example mode determination circuitry 114 determines the final output classification based on the plurality of classifications output from the example tree-based decision circuitry 112. For example, the example mode determination circuitry 114 determines the output classification based on the mode output from the tree-based decision circuitry 112. At block 434, the example interface 110 outputs the final classification. For example, the interface 100 may output the final classification to another system, processor, circuit, and/or component that may perform an action based on the output classification. As described above in conjunction with FIG. 1, the classification can be used to identify unique engine conditions and/or health care diagnostic conditions to tailor maintenance or optimize performance.

FIG. 5 is a block diagram of an example processor platform 500 structured to execute the instructions of FIGS. 4A-4B to implement the example random forest circuitry 104 of FIGS. 1-2. The processor platform 500 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, or any other type of computing device.

The processor platform 500 of the illustrated example includes a processor 512. The processor 512 of the illustrated example is hardware. For example, the processor 512 can be implemented by one or more integrated circuits, logic circuits, microprocessors, GPUs, DSPs, or controllers from any desired family or manufacturer. The hardware processor may be a semiconductor based (e.g., silicon based) device. In this example, the processor 512 implements at least one of the example communication interface 106, the example interface 110, the example tree-based decision circuitry 112, the example mode determination circuitry 114, the example interface(s) 200, the example logic circuitry 202, the example counter 204, and/or the example comparator 206 of FIGS. 1 and/or 2.

The processor 512 of the illustrated example includes a local memory 513 (e.g., a cache). In the example of FIG. 5, the local memory 513 implements the example tree data storage 108 and/or the example register 208 of FIGS. 1 and/or 2. The processor 512 of the illustrated example is in communication with a main memory including a volatile memory 514 and a non-volatile memory 516 via a bus 518. The volatile memory 514 may be implemented by Synchronous Dynamic Random Access Memory (SDRAM), Dynamic Random Access Memory (DRAM), RAMBUS^{®} Dynamic Random Access Memory (RDRAM^{®}) and/or any other type of random access memory device. The non-volatile memory 516 may be implemented by flash memory and/or any other desired type of memory device. Access to the main memory 514, 516 is controlled by a memory controller. Any one of the example volatile memory 514, the example non-volatile memory 516, and/or the example mass storage device 528 may implement the example tree data storage 108 and/or the example register 208 of FIGS. 1-2.

The processor platform 500 of the illustrated example also includes an interface circuit 520. The interface circuit 520 may be implemented by any type of interface standard, such as an Ethernet interface, a universal serial bus (USB), a Bluetooth^{®} interface, a near field communication (NFC) interface, and/or a PCI express interface.

In the illustrated example, one or more input devices 522 are connected to the interface circuit 520. The input device(s) 522 permit(s) a user to enter data and/or commands into the processor 512. The input device(s) can be implemented by, for example, an audio sensor, a microphone, a camera (still or video), a keyboard, a button, a mouse, a touchscreen, a track-pad, a trackball, and/or a voice recognition system.

One or more output devices 524 are also connected to the interface circuit 520 of the illustrated example. The output devices 524 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, and/or speaker. The interface circuit 520 of the illustrated example, thus, typically includes a graphics driver card, a graphics driver chip and/or a graphics driver processor.

The interface circuit 520 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 526. The communication can be via, for example, an Ethernet connection, a digital subscriber line (DSL) connection, a telephone line connection, a coaxial cable system, a satellite system, a line-of-site wireless system, a cellular system, etc.

The processor platform 500 of the illustrated example also includes one or more mass storage devices 528 for storing software and/or data. Examples of such mass storage devices 528 include floppy disk drives, hard drive disks, compact disk drives, Blu-ray disk drives, redundant array of independent disks (RAID) systems, and digital versatile disk (DVD) drives.

The machine executable instructions 532 of FIG. 5 (e.g., corresponding to the machine readable and/or executable instructions 400 of FIGS. 4A and/or 4B) may be stored in the mass storage device 528, in the volatile memory 514, in the non-volatile memory 516, and/or on a removable non-transitory computer readable storage medium such as a CD or DVD

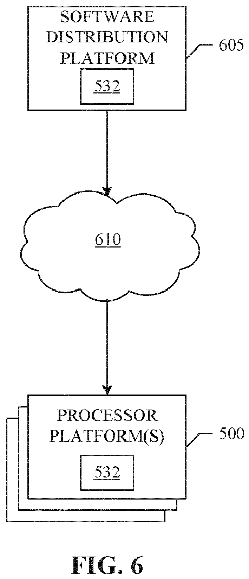

A block diagram illustrating an example software distribution platform 605 to distribute software such as the example computer readable instructions 532 of FIG. 5 to third parties is illustrated in FIG. 6. The example software distribution platform 605 may be implemented by any computer server, data facility, cloud service, etc., capable of storing and transmitting software to other computing devices. The third parties may be customers of the entity owning and/or operating the software distribution platform. For example, the entity that owns and/or operates the software distribution platform may be a developer, a seller, and/or a licensor of software such as the example computer readable instructions 532 of FIG. 5 . The third parties may be consumers, users, retailers, OEMs, etc., who purchase and/or license the software for use and/or re-sale and/or sub-licensing. In the illustrated example, the software distribution platform 605 includes one or more servers and one or more storage devices. The storage devices store the computer readable instructions 532, which may correspond to the example machine readable instructions 400 of FIGS. 4A-4B, as described above. The one or more servers of the example software distribution platform 605 are in communication with a network 610, which may correspond to any one or more of the Internet and/or any of the example networks 526 described above. In some examples, the one or more servers are responsive to requests to transmit the software to a requesting party as part of a commercial transaction. Payment for the delivery, sale and/or license of the software may be handled by the one or more servers of the software distribution platform and/or via a third party payment entity. The servers enable purchasers and/or licensors to download the computer readable instructions 532 from the software distribution platform 605. For example, the software, which may correspond to the example computer readable instructions 532 of FIG. 5, may be downloaded to the example processor platform 500, which is to execute the computer readable instructions 532 to implement the random forest circuitry 104. In some example, one or more servers of the software distribution platform 605 periodically offer, transmit, and/or force updates to the software (e.g., the example computer readable instructions 532 of FIG. 5) to ensure improvements, patches, updates, etc. are distributed and applied to the software at the end user devices.

Example methods, apparatus, systems, and articles of manufacture to implement a random forest are disclosed herein. Further examples and combinations thereof include the following: Example 1 includes an apparatus to implement a random forest, the apparatus comprising logic circuitry to, for a first cycle, identify a feature value corresponding to an initial node identifier of a data structure, the feature value including in an input feature array, a comparator to compare the feature value to a threshold corresponding to the initial node identifier, and a register to store an updated node identifier, the updated node identifier being (a) a first updated node identifier when the feature value exceeds the threshold or (b) a second updated node identifier when the feature value is below the threshold, the logic circuitry to use the updated node identifier for a second cycle.

Example 2 includes the apparatus of any preceding example, wherein the logic circuitry is to, for the second cycle, identify a second feature value corresponding to the updated node identifier, the comparator to compare the second feature value to a second threshold corresponding to the updated node identifier, and the logic circuitry is to output (a) a third updated node identifier when the second feature value exceeds the second threshold or (b) a fourth updated node identifier when the second feature value is less than the second threshold.

Example 3 includes the apparatus of any preceding example, wherein the logic circuitry is to determine if the outputted node identifier is a leaf of a tree based on a value of the outputted node identifier.

Example 4 includes the apparatus of any preceding example, wherein the logic circuitry is to output a classification for the input feature array based on the value of the outputted node identifier when the outputted node identifier is a leaf.

Example 5 includes the apparatus of any preceding example, wherein the first cycle and the second cycle correspond to a classification process, the logic circuitry to pause the classification process after the first cycle is complete, the register to maintain storage of the updated node identifier during the pause, and resume the classification process before the second cycle by accessing the updated node identifier from the register.

Example 6 includes the apparatus of any preceding example, further including a counter to increment a count corresponding to a number of cycles.

Example 7 includes the apparatus of any preceding example, wherein the logic circuitry is to discard an output classification when the count exceeds a second threshold.

Example 8 includes the apparatus of any preceding example, wherein the logic circuitry is to generate an output classification of the input feature array based on the updated node identifier.

Example 9 includes the apparatus of any preceding example, further including mode determination circuitry to determine a final output classification based on a plurality of output classifications, the plurality of output classifications including the output classification generated by the logic circuitry.

Example 10 includes the apparatus of any preceding example, wherein a position of the feature value in the input feature array, the initial node identifier, the threshold, the first updated node identifier, and the second updated node identifier are included in the data structure, the data structure corresponding to a tree of a trained random forest.

Example 11 includes a non-transitory computer readable storage medium comprising instructions, which, when executed, cause one or more processors to at least for a first cycle, identify a feature value corresponding to an initial node identifier of a data structure, the feature value including in an input feature array, compare the feature value to a threshold corresponding to the initial node identifier, and to store an updated node identifier, the updated node identifier being (a) a first updated node identifier when the feature value exceeds the threshold or (b) a second updated node identifier when the feature value is below the threshold, the updated node identifier used for a second cycle.

Example 12 includes the non-transitory computer readable storage medium of any preceding example, wherein the instructions cause the one or more processors to for the second cycle, identify a second feature value corresponding to the updated node identifier, compare the second feature value to a second threshold corresponding to the updated node identifier, and output (a) a third updated node identifier when the second feature value exceeds the second threshold or (b) a fourth updated node identifier when the second feature value is less than the second threshold.

Example 13 includes the non-transitory computer readable storage medium of any preceding example, wherein the instructions cause the one or more processors to determine if the outputted node identifier is a leaf of a tree based on a value of the outputted node identifier.

Example 14 includes the non-transitory computer readable storage medium of any preceding example, wherein the instructions cause the one or more processors to output a classification for the input feature array based on the value of the outputted node identifier when the outputted node identifier is a leaf.

Example 15 includes the non-transitory computer readable storage medium of any preceding example, wherein the first cycle and the second cycle correspond to a classification process, the instructions to cause the one or more processors to pause the classification process after the first cycle is complete, maintain storage of the updated node identifier during the pause, and resume the classification process before the second cycle by accessing the updated node identifier.

Example 16 includes the non-transitory computer readable storage medium of any preceding example, wherein the instructions cause the one or more processors to increment a count corresponding to a number of cycles.

Example 17 includes the non-transitory computer readable storage medium of any preceding example, wherein the instructions cause the one or more processors to discard an output classification when the count exceeds a second threshold.

Example 18 includes the non-transitory computer readable storage medium of any preceding example, wherein the instructions cause the one or more processors to generate an output classification of the input feature array based on the updated node identifier.

Example 19 includes the non-transitory computer readable storage medium of any preceding example, wherein the instructions cause the one or more processors to determine a final output classification based on a plurality of output classifications, the plurality of output classifications including the output classification.

Example 20 includes an apparatus to implement a random forest, the apparatus comprising memory, instructions included in the apparatus, and processor circuitry to execute the instructions to for a first cycle, identify a feature value corresponding to an initial node identifier of a data structure, the feature value including in an input feature array, compare the feature value to a threshold corresponding to the initial node identifier, and store an updated node identifier, the updated node identifier being (a) a first updated node identifier when the feature value exceeds the threshold or (b) a second updated node identifier when the feature value is below the threshold, the updated node identifier used for a second cycle.

Example 21 includes the apparatus of any preceding example, wherein the processor circuitry is to for the second cycle, identify a second feature value corresponding to the updated node identifier, compare the second feature value to a second threshold corresponding to the updated node identifier, and output (a) a third updated node identifier when the second feature value exceeds the second threshold or (b) a fourth updated node identifier when the second feature value is less than the second threshold.

Example 22 includes the apparatus of any preceding example, wherein the processor circuitry is to determine if the outputted node identifier is a leaf of a tree based on a value of the outputted node identifier.

Example 23 includes the computer readable storage medium of any preceding example, wherein the processor circuitry is to output a classification for the input feature array based on the value of the outputted node identifier when the outputted node identifier is a leaf.

Example 24 includes the apparatus of any preceding example, wherein the first cycle and the second cycle correspond to a classification process, the instructions to cause the one or more processor to pause the classification process after the first cycle is complete, the register to maintain storage of the updated node identifier during the pause, and resume the classification process before the second cycle by accessing the updated node identifier from the register.

Example 25 includes the apparatus of any preceding example, wherein the processor circuitry is to increment a count corresponding to a number of cycles.

Example 26 includes the apparatus of any preceding example, wherein the processor circuitry is to discard an output classification when the count exceeds a second threshold.

Example 27 includes the apparatus of any preceding example, wherein the processor circuitry is to generate an output classification of the input feature array based on the updated node identifier.

Example 28 includes the apparatus of any preceding example, wherein the processor circuitry is to determine a final output classification based on a plurality of output classifications, the plurality of output classifications including the output classification.

From the foregoing, it will be appreciated that example methods, apparatus and articles of manufacture have been disclosed to implement a random forest. Examples disclosed herein convert a traditional random forest classifier using a data structure in order to simplify the logic needed to implement the random forest. In this manner, examples disclosed herein implement a random forest using less computer resources (e.g., memory, processor resources, throughput, etc.) than traditional techniques. Accordingly, the disclosed methods, apparatus and articles of manufacture are accordingly directed to one or more improvement(s) in the functioning of a random forest classifier.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

The following claims are hereby incorporated into this Detailed Description by this reference, with each claim standing on its own as a separate embodiment of the present disclosure.

## Claims

1. An apparatus to implement a random forest, the apparatus comprising:
logic circuitry (202) to, for a first cycle, identify a feature value corresponding to an initial node identifier of a data structure, the feature value including in an input feature array;
a comparator (206) to compare the feature value to a threshold corresponding to the initial node identifier; and
a register (208) to store an updated node identifier, the updated node identifier being (a) a first updated node identifier when the feature value exceeds the threshold or (b) a second updated node identifier when the feature value is below the threshold, the logic circuitry (202) to use the updated node identifier for a second cycle.

2. The apparatus of claim 1, wherein:
the logic circuitry (202) is to, for the second cycle, identify a second feature value corresponding to the updated node identifier;
the comparator (206) to compare the second feature value to a second threshold corresponding to the updated node identifier; and
the logic circuitry (202) is to output (a) a third updated node identifier when the second feature value exceeds the second threshold or (b) a fourth updated node identifier when the second feature value is less than the second threshold.

3. The apparatus of claim 2, wherein the logic circuitry (202) is to determine if the outputted node identifier is a leaf of a tree based on a value of the outputted node identifier.

4. The apparatus of claim 3, wherein the logic circuitry (202) is to output a classification for the input feature array based on the value of the outputted node identifier when the outputted node identifier is a leaf.

5. The apparatus of claim 2 or 3, wherein the first cycle and the second cycle correspond to a classification process, the logic circuitry (202) to:
pause the classification process after the first cycle is complete, the register (208) to maintain storage of the updated node identifier during the pause; and
resume the classification process before the second cycle by accessing the updated node identifier from the register (208).

6. The apparatus of any one of claims 1-5, further including a counter (204) to increment a count corresponding to a number of cycles.

7. The apparatus of claim 6, wherein the logic circuitry (202) is to discard an output classification when the count exceeds a second threshold.

8. The apparatus of any one of claims 1-7, wherein the logic circuitry (202) is to generate an output classification of the input feature array based on the updated node identifier.

9. The apparatus of claim 8, further including mode determination circuitry (114) to determine a final output classification based on a plurality of output classifications, the plurality of output classifications including the output classification generated by the logic circuitry (202).

10. The apparatus of any one of claims 1-9, wherein a position of the feature value in the input feature array, the initial node identifier, the threshold, the first updated node identifier, and the second updated node identifier are included in the data structure, the data structure corresponding to a tree of a trained random forest.

11. A non-transitory computer readable storage medium comprising instructions, which, when executed, cause one or more processors to at least:
for a first cycle, identify a feature value corresponding to an initial node identifier of a data structure, the feature value including in an input feature array (412);
compare the feature value to a threshold corresponding to the initial node identifier (414); and
to store an updated node identifier, the updated node identifier being (a) a first updated node identifier when the feature value exceeds the threshold or (b) a second updated node identifier when the feature value is below the threshold, the updated node identifier used for a second cycle (416, 418).

12. The non-transitory computer readable storage medium of claim 11, wherein the instructions cause the one or more processors to:
for the second cycle, identify a second feature value corresponding to the updated node identifier;
compare the second feature value to a second threshold corresponding to the updated node identifier; and
output (a) a third updated node identifier when the second feature value exceeds the second threshold or (b) a fourth updated node identifier when the second feature value is less than the second threshold.

13. The non-transitory computer readable storage medium of claim 12, wherein the instructions cause the one or more processors to determine if the outputted node identifier is a leaf of a tree based on a value of the outputted node identifier (420).

14. The non-transitory computer readable storage medium of claim 13, wherein the instructions cause the one or more processors to output a classification for the input feature array based on the value of the outputted node identifier when the outputted node identifier is a leaf (428).

15. A method to implement a random forest, the method comprising:
for a first cycle, identifying, by executing an instruction with one or more processors, a feature value corresponding to an initial node identifier of a data structure, the feature value including in an input feature array (412);
comparing, by executing an instruction with the one or more processors, the feature value to a threshold corresponding to the initial node identifier (414); and
storing an updated node identifier, the updated node identifier being (a) a first updated node identifier when the feature value exceeds the threshold or (b) a second updated node identifier when the feature value is below the threshold, the updated node identifier used for a second cycle (416, 418).
